# EUROPÄISCHE PATENTSCHRIFT

(11) **EP 1 970 100 B1**
(45) Veröffentlichungstag und Bekanntmachung des Hinweises auf die Patenterteilung: **16.05.2012**
(21) Anmeldenummer: 07005097.6
(22) Anmeldetag: 13.03.2007
(51) Int. Cl.: A62B 3/00, B60Q 3/02, B64D 25/08, G09F 13/20, G09F 19/22, F21S 4/00

(54) **Fluchtwegmarkierung für ein Flugzeug**
Escape route markings for an airplane
Marquage du chemin de fuite pour un avion

(43) Veröffentlichungstag der Anmeldung: 17.09.2008
(73) Patentinhaber: Lufthansa Technik AG, 22335 Hamburg (DE)
(72) Erfinder: Sutter, Wolfgang, D-25469 Halstenbek (DE)
(74) Vertreter: Hauck Patent- und Rechtsanwälte

(56) Entgegenhaltungen:
- WO-A-96/33093
- US-B1- 6 276 634

## Beschreibung

Die vorliegende Erfindung betrifft eine Fluchtwegmarkierung für ein Flugzeug.

Es ist bekannt zur Fluchtwegmarkierung in Flugzeugen, die auch als Notfallmarkierung bezeichnet wird, photolumineszente Streifen am Fußboden des Flugzeugs anzuordnen. Photolumineszenz wird gelegentlich auch als Nachleuchten und/oder Phosphorisieren bezeichnet. Die sicherheitstechnischen Anforderungen sind beispielsweise in der Deutschen Industrie Norm DIN 67 510 spezifiziert. Die Streifen werden geradlinig im Fußboden verlegt und weisen den Passagieren und der Besatzung im Notfall den Weg zu den Ausgängen und Notausstiegen. In der Vergangenheit haben sich bei der Ausgestaltung von Flugzeugen zunehmend photolumineszente Streifen durchgesetzt, da diese ausfallsicher sind und ohne Stromversorgung betrieben werden können.

Aus WO 96/33093 A1 ist beispielsweise eine Notfallbeleuchtung bekannt, bei der ein photolumineszenter Streifen in einem transparenten Trägerelement angeordnet ist. Das Trägerelement kann dabei ein-, zwei- oder dreistückig ausgebildet sein. Jedes Trägerelement besitzt eine langgestreckte rechteckige Form und kann dementsprechend in einer 90°- und 180°-Orientierung zu einem anderen Trägerelement verlegt werden.

Aus WO 94/17766 A1 ist eine photolumineszente Reflektorschicht bekannt. Es wird vorgeschlagen, aus dem flächigen Material längliche Streifen herzustellen.

Aus US 4,401,050 ist eine photolumineszente Fluchtwegmarkierung bekannt, die aus länglichen Streifen besteht. Als Richtungsanzeiger für den markierten Fluchtweg sind Pfeile vorgesehen.

Aus WO 87/02813 A1 sind Richtungsanzeiger für den Fluchtweg bekannt, die mit photolumineszenten Mitteln arbeiten, die entlang des Gangs des Flugzeugs als einzelne unverbundene Pfeile am Fußboden angeordnet sind.

Aus EP 0 489 561 A1 ist eine dauerhaft fluoreszierende Lage bekannt, bei der Farbpigmente in eine Polymermatrix eingebunden sind. Hierbei kann das fluoreszente Material in einem Träger eingebunden sein, der dem Fluoreszenslicht durch zusätzliche Filter verschiedene optische Eigenschaften verleiht.

Aus FR 2 308 155 A1 sind mit photolumineszentem Material hinterlegte Sicherheitsschilder bekannt.

US 4,208,300 beschreibt eine Zusammensetzung für photolumineszentes Material, wie es an Treppenwegen und im Straßenverkehr verwendet werden kann.

Gegenwärtig ist festzustellen, daß die Anforderungen an die Gestaltung bei der Möblierung des Fluggastinnenraums sich ändern. Insbesondere besteht der Trend dahin, nicht länger rechtwinklige Möbel vorzusehen, sondern auch geschwungene Möbelkonturen einzusetzen. Neben der ästhetischen Wirkung einer geschwungenen Möblierung, beispielsweise Sitzbänken mit geschwungener Außenkontur, Schränke und Theken im Servicebereich, besitzen geschwungene Möbel auch sicherheitstechnische Vorzüge, da die Passagiere sich beispielsweise weniger leicht verletzen können. Die zunehmend aufwendiger gestaltete Möblierung in dem Passagierraum macht es notwendig, auch die Fluchtwegmarkierung flexibel hieran anpassen zu können.

Der vorliegenden Erfindung liegt die Aufgabe zugrunde, eine Fluchtwegmarkierung bereitzustellen, die sich mit einfachen Mitteln an unterschiedlichste Anforderungen und Gestaltungen im Passagierraum eines Flugzeugs anpassen läßt.

Erfindungsgemäß wird die Aufgabe durch eine Fluchtwegmarkierung gemäß Anspruch 1 gelöst. Vorteilhafte Ausgestaltungen bilden die Gegenstände der Unteransprüche.

Die erfindungsgemäße Fluchtwegmarkierung ist für ein Flugzeug vorgesehen und besitzt mehrere photolumineszente Elemente, die im Dunklen nachleuchten, um den Fluchtweg anzuzeigen. Jedes der photolumineszenten Elemente ist in einem Trägerelement angeordnet, das zur Anbringung, beispielsweise durch Kleben oder Verschrauben, an einem Untergrund vorgesehen ist. Das erfindungsgemäße Trägerelement besitzt an seinen Enden Anschlußkanten, die die Grenze zu dem nachfolgenden Trägerelement bilden. Erfindungsgemäß sind die Anschlußkanten derart ausgebildet, daß diese entweder gebogen oder sich in mindestens zwei Abschnitten nicht senkrecht zu einer Orientierungsachse des Trägerelements erstrecken, die senkrecht auf einem Querschnitt im Bereich der Anschlußkante steht. Bei einem gerade verlaufenden Trägerelement fällt die Orientierungsachse mit einer Mittellängsachse zusammen, bei einem gebogenen Trägerelement liegt die Orientierungsachse in der Verlängerung der gebogenen Mittellängsachse. Die Anschlußkanten verlaufen entweder bogenförmig oder weisen mehrere Abschnitte auf, die sich nicht senkrecht zu Orientierungsachse erstrecken. Zweckmäßiger Weise erstrecken sich die Abschnitte jeweils unter einem anderen Winkel zur Orientierungsachse.

Bei der erfindungsgemäßen, nicht senkrecht zur Orientierungsachse verlaufenden Anschlußkante schließen zwei hintereinander angeordnete Trägerelemente einen Winkel miteinander ein, der von 90° und 180° verschieden sein kann. Die erfindungsgemäße Ausgestaltung des Trägerelements ermöglicht es, diese für eine Fluchtwegmarkierung in Bögen zu verlegen. Eine so gebildete, geschwungene Fluchtwegmarkierung kann besonders gut die Konturen der Möblierung im Passagierraum aufnehmen. Auch können andere Formen durch die Fluchtwegmarkierung aufgenommen werden, so daß sich insgesamt diese leichter an die Erfordernisse des zu markierenden Fluchtwegs anpassen läßt. Gegenüber den bekannten Fluchtwegmarkierungen, bei denen einzelne Elemente stets rechtwinklig oder geradlinig aufeinanderstoßen, erlauben die erfindungsgemäßen Trägerelemente, eine Fluchtwegmarkierung in beliebigen Kurven und Bahnen auszulegen.

In einer bevorzugten Ausgestaltung sind die Trägerelemente gerade und symmetrisch zu ihrer Mittellängsachse ausgebildet. Das Trägerelement mit einer symmetrischen Anschlußkante besitzt den Vorteil, daß nicht linke und rechte Trägerelemente zu unterscheiden sind, sondern ein Trägerelement sowohl für eine linksgekrümmte als auch eine rechtsgekrümmte Biegung der Fluchtwegmarkierung eingesetzt werden können.

In einer zweckmäßigen Ausgestaltung stoßen die Anschlußkanten hintereinander angeordneter Trägerelemente entlang eines Abschnitts flächig aneinander.

In einer möglichen Ausgestaltung sind die Anschlußkanten als Polygonzug ausgebildet. Werden zwei Anschlußkanten in dieser Ausgestaltung aneinander gelegt, so liegen diese im Bereich eines polygonalen Abschnitts flächig aneinander an.

In einer alternativen Ausgestaltung ist die Anschlußkante in mindestens einem Abschnitt gekrümmt ausgebildet. Bevorzugt kann als Krümmung der Anschlußkante eine Kreisform eingesetzt werden.

In einer besonders zweckmäßigen Ausgestaltung besitzt das Trägerelement an einem Ende eine erste Anschlußkante und an seinem zweiten Ende eine zweite Anschlußkante. Erste und zweite Anschlußkanten besitzen bevorzugt eine komplementäre Form. In dieser Ausgestaltung sind die komplementären Formen der Anschlußkanten besonders aufeinander abgestimmt, um einen möglichst großflächigen Anschluß zwischen zwei benachbarten Trägerelementen herzustellen.

In einer bevorzugten Ausgestaltung ist die komplementäre Form in den Anschlußkanten so ausgebildet, daß eine formschlüssige Verbindung zwischen den Trägerelementen möglich ist. Die formschlüssige Verbindung verankert die Trägerelemente aneinander und verhindert so, daß diese im montierten Zustand sich relativ zueinander in Längsrichtung verschieben können. Insbesondere kann die formschlüssige Verbindung so ausgebildet sein, daß die Trägerelemente sich stufenlos relativ zueinander in ihrer Winkelposition verstellen können.

In einer besonderen Ausgestaltung sind zwei benachbarte Trägerelemente über ein Verbindungsstück miteinander verbunden. Das Verbindungsstück verbindet die Trägerelemente nach Art einer Gliederkette. Ein besonderer Vorteil der verbundenen Trägerelemente liegt darin, daß diese sich von ihrer Befestigung leichter auf dem Untergrund anordnen und ausrichten lassen.

In einer bevorzugten Ausgestaltung ist das Verbindungsstück als ein längliches Element ausgebildet, das an seinen Enden Verankerungszapfen aufweist. Bevorzugt werden die Verankerungszapfen an der Unterseite der Trägerelemente in Ausnehmungen angeordnet. Auf diese Weise stellen die Verbindungsstücke den richtigen Abstand zwischen den Trägerelementen sicher und erlauben es so, eine Kette von Trägerelementen entsprechend zu bewegen und auszurichten.

In einer bevorzugten Ausgestaltung sind Adapterelemente vorgesehen, die jeweils ein photolumineszierendes Element tragen und zwei Anschlußkanten besitzen, deren Formen an die Form der Anschlußkante des Trägerelements angepaßt sind. Trägerelemente können beidseitig unter unterschiedlichen Winkeln an das Adapterelement angelegt werden. Das Adapterelement ist bevorzugt mit einer bogenförmigen konvexen Anlage ausgebildet und das Trägerelement weist eine bogenförmige konkave Anlage auf, um Adapterelement und Trägerelement in einem vorbestimmten Winkelbereich zueinander ausrichten zu können. Die Verbindung der Adapterelemente erlaubt, besonders enge Radien beim Verlegen der Trägerelemente zu beschreiben.

Bevorzugte Ausführungsbeispiele werden nachfolgend anhand der Figuren näher erläutert.

Es zeigt:
- Fig. 1: Trägerelemente einer Fluchtwegmarkierung, die aneinandergrenzend in einem Bogen angeordnet sind,
- Fig. 2: einen Querschnitt durch ein Trägerelement aus Fig. 1,
- Fig. 3: eine Kette von hintereinander angeordneten Trägerelementen, die einen Bogen beschreiben,
- Fig. 4: einen Querschnitt durch eines der Trägerelemente,
- Fig. 5: eine Reihe von hintereinander angeordneten Elementen, wobei die Trägerelemente einen vorstehenden Kopf besitzen, der in einer Ausnehmung des angrenzenden Elements angeordnet ist,
- Fig. 6: eine Kette von Trägerelementen, die an ihren Enden über eine Nut-Federverbindung miteinander verbunden sind,
- Fig. 7: einen Querschnitt durch die Verbindung der Trägerelemente im Randbereich,
- Fig. 8: ein Trägerelement in einer Ansicht von unten,
- Fig. 9: Trägerelemente, die über Verbindungsstücke miteinander verbunden sind, wobei die Enden der Trägerelemente über geschwungene Kappen verschlossen sind,
- Fig. 10: eine Kette von Trägerelementen, die über Verbindungsstücke miteinander verbunden sind und gebogene Endkappen besitzen,
- Fig. 11: Trägerelemente, die für das Ende der Kette vorgesehen sind und die eine gebogene Endkappe besitzen,
- Fig. 12: eine weitere Ausgestaltung von Trägerelementen, deren Trägerelemente eine rohrartige Struktur besitzen und über gebogene Endkappen verschlossen werden,
- Fig. 13: einen Querschnitt durch das rohrartige Trägerelement aus Fig. 12,
- Fig. 14: den Aufbau eines Trägerelements, das über eine Endkappe verschlossen ist und Bohrungen sowie Senkungen für eine Verschraubung mit dem Untergrund aufweist,
- Fig. 15: eine Anordnung von Elementen mit dazwischen angeordneten Adapterelementen,
- Fig. 16: eine Kette von Elementen, die entweder abgerundete Anschlußkanten oder spitze Anschlußkanten besitzen,
- Fig. 17: eine Anordnung von Elementen in einer Ansicht von der Oberseite und von der Unterseite, die über Verbindungsstücke miteinander verbunden sind, und
- Fig. 18: eine schematische Draufsicht auf einen vorderen Abschnitt eines Fluggastraums.

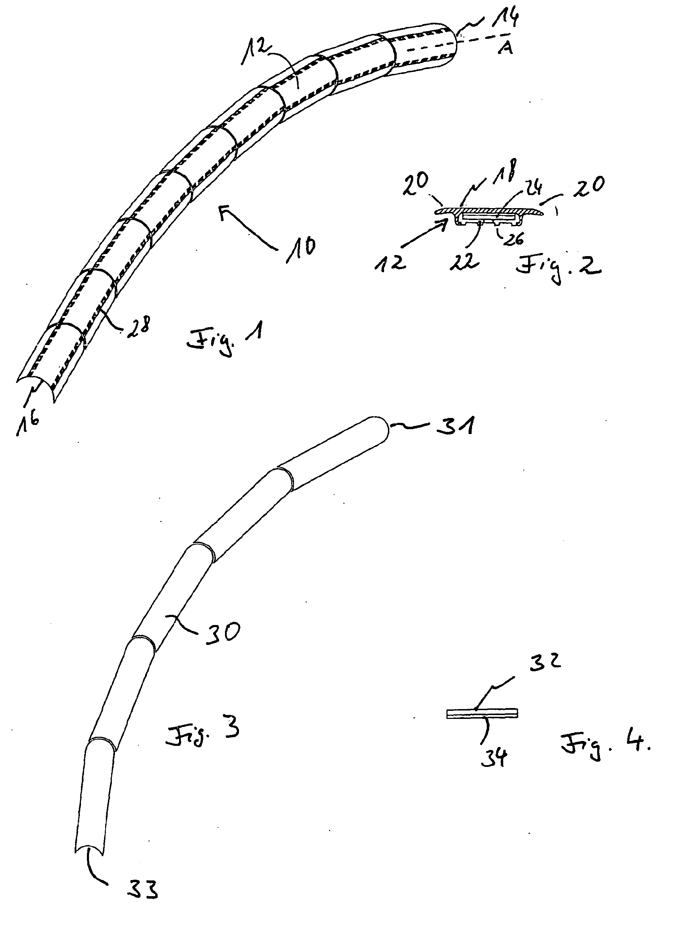

Fig. 1 zeigt eine Folge von Trägerelementen 12, die entlang einer gebogenen Bahn angeordnet sind. Jedes der Trägerelemente 12 besitzt eine nach außen gewölbte konvexe Anschlußkante 14 und eine nach innen gewölbte konkave Anschlußkante 16. Anschlußkanten 14 und 16 besitzen ungefähr die gleiche Krümmung, so daß zwei Trägerelemente 12 hintereinander mit der vorspringenden Anschlußkante 14 in der nach innen gewölbten Anschlußkante 16 angeordnet werden können. Zwei Trägerelemente können bezogen auf ihre Mittellängsachse über eine symmetrischen Winkelbereich relativ zueinander ausgerichtet sein. Die Mittellängsachse der Trägerelemente fällt für die gerade ausgebildeten Trägerelemente mit der Orientierungsachse zusammen.

Fig. 2 zeigt einen Querschnitt durch ein Trägerelement 12. Deutlich zu erkennen in dem Querschnitt ist ein Deckel 18, der seitlich überstehende Flügel 20 besitzt. Der Deckel 18 ist auf einen Halter 22 aufgesetzt. Der Halter 22 besitzt eine wannenförmige Struktur, die ein photolumineszentes Material 24 aufnimmt. Das photolumineszente Material 24 ist in Form eines Streifens vorgesehen, der in den Halter 22 eingelegt oder eingeklebt ist. Das photolumineszente Material 24 wird über den Deckel 18 in dem Halter 22 gesichert. Der Deckel 18 dient gleichzeitig als Trittschutz für das photolumineszente Material 24. Der Halter 22 besitzt auf seiner Unterseite vier in Längsrichtung des Trägerelements verlaufende Stege 26, die ein Ankleben des Halters 22 an dem Untergrund erleichtern.

Die seitlich abstehenden Flügel 20 des Deckels 18 besitzen einen Abstand von der Unterseite der Stege und damit vom Untergrund. Die Flügel 20 erlauben somit einen bündigen Abschluß mit einem seitlich anschließenden Bodenbelag.

Die in Fig. 1 zu erkennende dunkle Begrenzungslinie 28 verdeutlicht den Übergang vom Halter 22 zu den Flügeln 20. Deckel und/oder Flügel 20 sind in diesem Ausführungsbeispiel und in den weiteren Ausführungsbeispielen transparent ausgebildet.

Fig. 3 zeigt eine Ausgestaltung, bei der wieder längliche Trägerelemente 30 mit konvexen und konkaven Anschlußkanten 31, 33 ausgestattet sind. Das Trägerelement 30 besitzt einen Ausbau mit einem flachen Träger 34, auf dem das photolumineszente Material 32 ohne Abdeckung angeordnet ist. Eine solche Ausgestaltung eignet sich besonders für Anwendungen, bei denen sich ein Bodenbelag mit geringer Höhe anschließt, beispielsweise ein flacher Kunstbelag. Alternativ kann auch das photoluminieszente Material als untere Schicht 34 vorgesehen sein, das auf ein transparentes Material 32 aufgebracht ist.

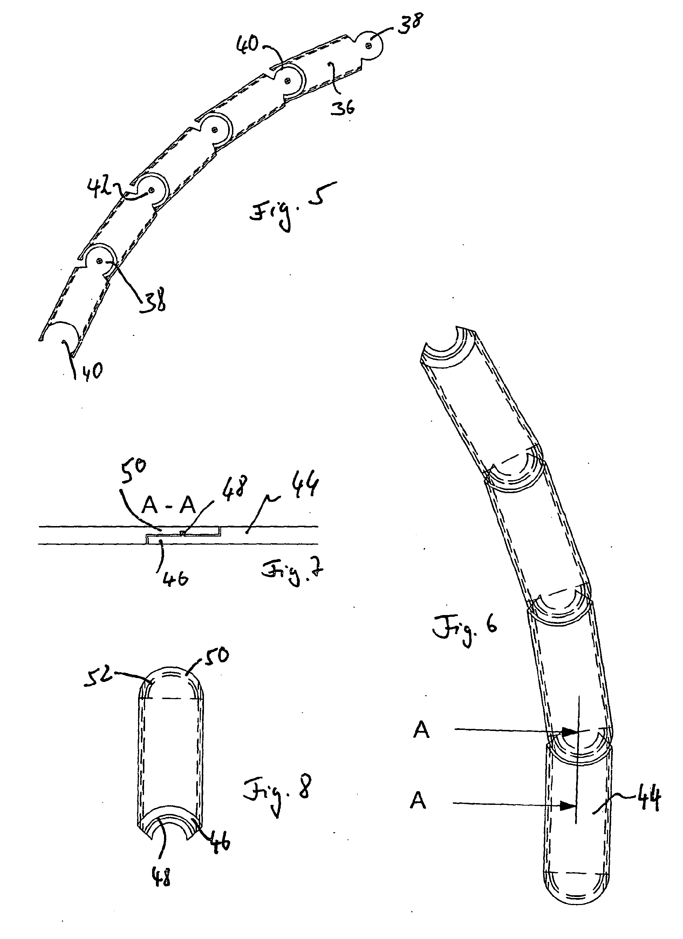

Fig. 5 zeigt eine Anordnung von Trägerelementen 36, die einen nahezu vollkreisigen Vorsprung 38 und am gegenüberliegenden Ende eine korrespondierende halbrunde Ausnehmung 40 besitzen. Die Trägerelementen 36 werden mit dem Vorsprung 38 in der Ausnehmung 40 des anschließenden Trägerelements verhakt und können vor einer Befestigung am Untergrund relativ zueinander ausgerichtet werden.

Neben der Variante, die einzelnen Elemente an den Fußboden zu kleben, besteht auch die Möglichkeit, die fertig ausgerichtete Kette in ihren Vorsprüngen 38 mit dem Untergrund 42 zu verschrauben. Die ineinandergehakten Trägerelemente können in einem vorbestimmten Winkelbereich kontinuierlich gegeneinander verstellt werden.

Fig. 6 zeigt eine Kette von hintereinander angeordneten Trägerelementen 44, die einander überlappend durch eine Nut-Federverbindung miteinander befestigt sind. Wie aus dem Schnitt entlang der Linie A-A in Fig. 7 zu erkennen, besitzt ein erstes Trägerelement 44 einen unten liegenden Endabschnitt 46. Der Endabschnitt 46 besitzt einen Vorsprung 48, der entlang einer Kreisbahn auf dem Endabschnitt 46 verläuft. Überlappend mit dem Endabschnitt 46 ist ein zweiter Endabschnitt 50 vorgesehen, der eine kreisbahnförmige Nut 52 aufweist. Der Endabschnitt 50 überlappt den Endabschnitt 46. Über den Vorsprung 48, der in der Ausnehmung 52 angeordnet ist, können zwei aneinandergrenzende Trägerelemente relativ in einem Winkel zueinander ausgerichtet werden.

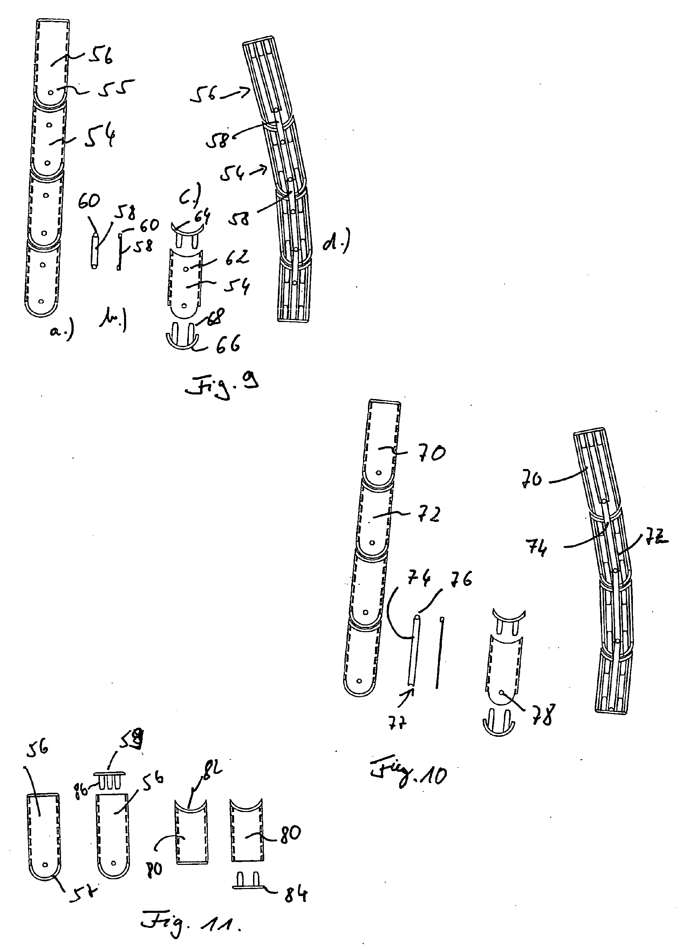

Fig. 9 zeigt Trägerelemente 54, die über ein Endstück 56 abgeschlossen sind. Die in Fig. 9a gezeigte Kette unterscheidet sich in zwei Merkmalen von den weiter oben beschriebenen Anordnungen. Die Trägerelemente 54 sind untereinander sind über Verbindungsstücke 58 miteinander verbunden. Das Endstück 56 ist mit einem endseitigen Trägerelement 54 verbunden. Die Verbindungsstücke 58 besitzen eine längliche Gestalt mit Verankerungszapfen 60 an ihren Enden. Das Trägerelement 54 besitzt an seiner Unterseite Ausnehmungen 62, die zur Aufnahme der Verankerungszapfen 60 dienen. Im verbundenen Zustand zeigt Fig. 9d, daß zwei aneinandergrenzende Trägerelemente über ein Verbindungsstück miteinander verbunden sind. Hierdurch erhält die Anordnung die Funktionalität einer Gliederkette, die sich flexibel ausrichten läßt, ohne daß die Trägerelemente die Verbindung miteinander verlieren.

Eine weitere Besonderheit der Trägerelemente 54 wird aus Fig. 9c ersichtlich. Das Trägerelement 54, das das photolumineszente Material aufnimmt, wird an beiden Enden jeweils über eine gebogen gestaltete Endkappe 64, 66 verschlossen. Die Endkappen 64, 66 besitzen jeweils ein Paar von Fingern 68, die die Endkappen 64, 66 an dem Trägerelement halten. Besonderer Vorteil einer gebogenen Endkappe ist, daß der Innenraum wirksam abgeschlossen ist und so die Pigmente des photolumineszenten Materials vor einer Oxidation geschützt sind und gleichzeitig eine gebogene Anschlußkante vorliegt, die eine Ausrichtung der Elemente hintereinander erlaubt. Die Endkappe kann ein flaches Grundelement mit Befestigungsfingern aufweisen oder auch eine Vertiefung mit einer umlaufenden Abschlußwand. Unabhängig von der Bauweise verschließt die Endkappe das Trägerelement.

Fig. 10 zeigt eine Anordnung von Trägerelementen 70, 72, die über Verbindungsstücke 74 relativ zueinander ausgerichtet sind. Das Verbindungsstück 74 besitzt an einem Ende einen Verankerungszapfen 76 und am anderen Ende eine halbrunde Ausnehmung 77. Der Verankerungszapfen 76 wird in einer Ausnehmung in dem Trägerelement verankert. Die halbrunde Ausnehmung 77 an dem vom Verankerungszapfen fortweisenden Ende des Verbindungsstücks 74 liegt im montierten Zustand an dem Verankerungszapfen im nächsten Trägerelement an. Auch kann die Ausnehmung 77 als Schnappverbindung für den Verankerungszapfen 76 ausgebildet sein, so daß über das Verbindungsstück zusätzlich das nächste Trägerelement gehalten wird.

Fig. 11 zeigt zwei Endstücke 56, 80, wie sie bei den Ausgestaltungen aus Fig. 9 oder 10 verwendet werden können. Die Endstücke 56, 80 besitzen eine gewölbte Anschlußkante 57, 82 und eine gerade Anschlußkante. Die gerade Anschlußkante wird über eine Kappe 59 oder 84 verschlossen, wobei die Kappe 84 zwei Finger und die Kappe 59 drei Finger 86 aufweist.

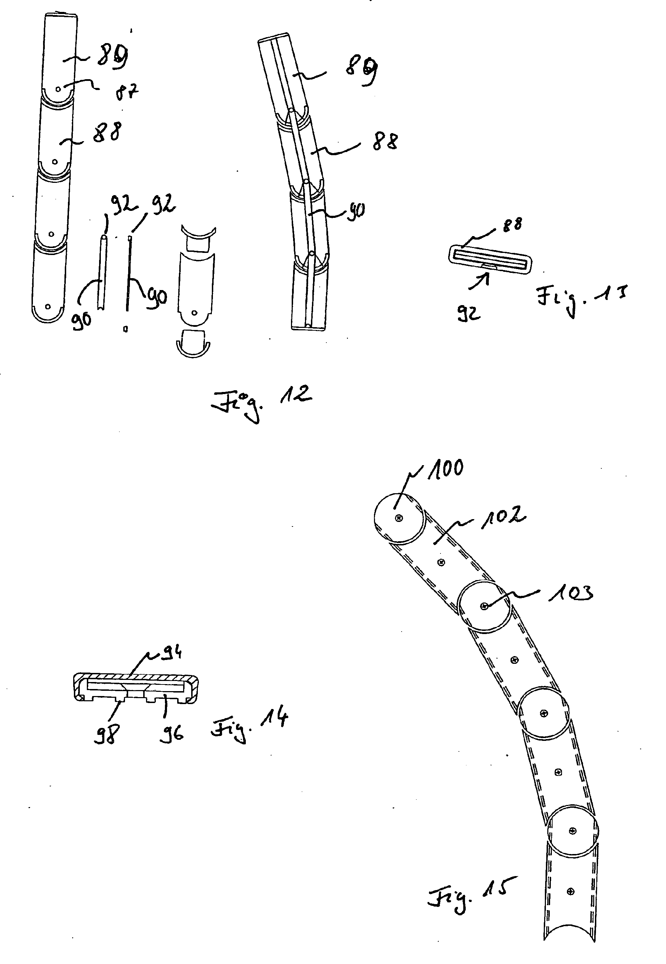

Fig. 12 zeigt eine weitere Ausgestaltung von Trägerelementen 88, 89, die über längliche Verbindungsstücke 90 relativ zueinander positioniert sind. Die Verbindungsstücke 90 besitzen einen ähnlichen Aufbau wie das Verbindungsstück aus Fig. 10. Im montierten Zustand bilden die Verbindungsstücke 90 einen fortlaufenden Steg 94, der sich unter dem Trägerelement fortsetzt. Das Trägerelement 88 besitzt, wie in Fig. 13 dargestellt, eine geschlossene Hülle mit einer unten liegenden Ausnehmung 92, in die im montierten Zustand das Verbindungsstück 90 eingesetzt ist. Das photolumineszente Material wird bei dieser Ausgestaltung in das Trägerelement 88 eingeschoben, welches bevorzugt mit gebogenen Endkappen verschlossen werden kann.

Fig. 14 zeigt eine alternative Ausgestaltung des Trägerelements im Querschnitt, bei der ein Deckel 94 auf einem Halter 96 angeordnet ist. Der Deckel 94 hinterfaßt den Halter 96, der über Stege 98, die sich in Längsrichtung des Halters 96 erstrecken, am Boden befestigt werden kann. Das photolumineszente Material ist zwischen Deckel 94 und Halter 96 angeordnet.

Die in Fig. 15 gezeigte Anordnung der Trägerelemente besitzt Adapterelemente 100, die jeweils zwischen zwei Trägerelementen 102 angeordnet sind. Die Trägerelemente 102 weisen eine längliche Form auf, während die Adapterelemente 100 eine ovale oder nahezu runde Form besitzen. Aufgrund der kurzen Länge der Adapterelemente 100 und ggf. auch der Trägerelemente 102 und der damit geringen Klebefläche wird es vorgezogen, die Adapter- und/oder Trägerelemente am Untergrund mit Schrauben 103 zu befestigen, um eine ausreichend feste Verbindung zu erzielen.

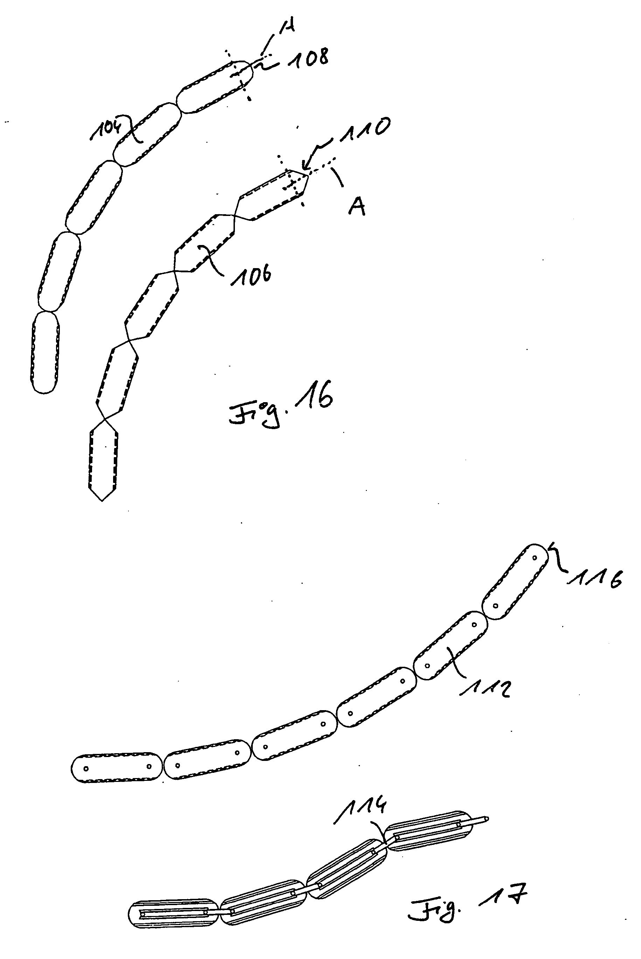

Fig. 16 zeigt zwei weitere Ausgestaltungen mit Trägerelementen 104 und 106. Trägerelement 104 besitzt halbrunde Anschlußkanten 108. Trägerelement 106 besitzt an beiden Enden eine spitze Anschlußkante 110. Betrachtet man für die Trägerelemente 104 und 106 den Querschnitt des Trägerelements kurz vor der Anschlußkante, so stehen die Anschlußkanten nicht senkrecht zu einer auf den Querschnitt senkrechtstehenden Orientierungsachse A. Die Orientierungsachse A ist in Fig. 16 ebenso wie in Fig. 1 eingezeichnet.

Fig. 17 zeigt eine weitere Ausgestaltung mit Trägerelementen 112, die über Verbindungsstücke 114 an ihren Enden miteinander verbunden sind. Die Verbindungsstücke 114 besitzen zwei Verankerungszapfen, die jeweils in Ausnehmungen (nicht dargestellt) in den Trägerelementen angeordnet sind. Durch die abgerundete Anschlußkante 116 können die Trägerelemente 112 kontinuierlich relativ zueinander verstellt werden.

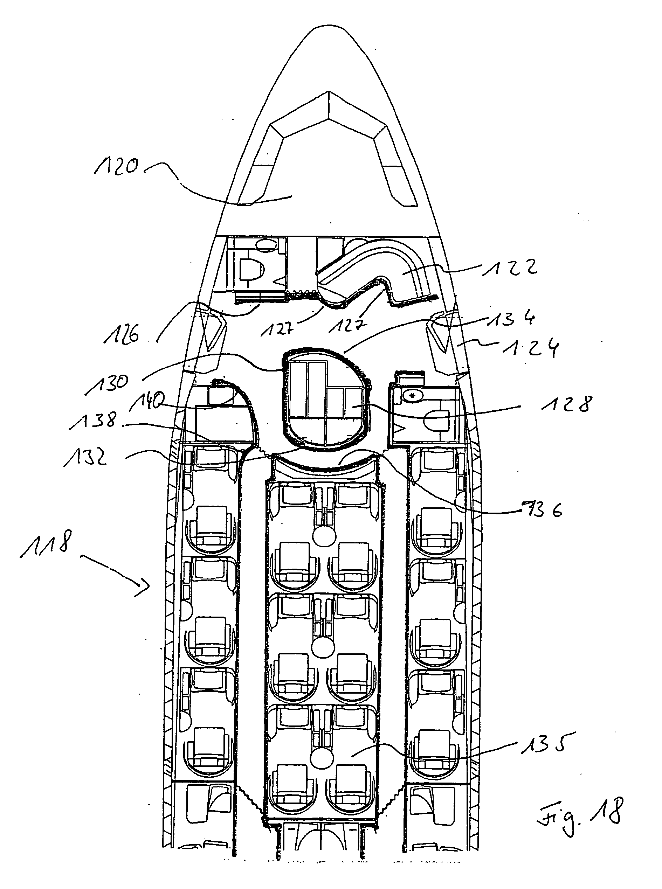

In Fig. 18 befinden sich im Bereich zwischen Fluggastraum 118 und Cockpit 120 eine Reihe von Möbeln und Einbauten 122. Die Möbel und Einbauten 122 sind noch vor den Ausgangstüren 124 angeordnet, die auch für den Notausstieg vorgesehen sind. Die vordere Kante der Möbel und Einbauten 122 ist durch eine Fluchtwegmarkierung 126 gekennzeichnet. Die Fluchtwegmarkierung 126 besitzt eine Reihe von geradlinigen Abschnitten, die sich mit gebogenen, an die Kontur der Möbel anpassenden Abschnitten 127 abwechseln.

Ein zentrales Schrankelement 128 in dem Fluggastraum ist ebenfalls durch eine geschwungen verlaufende Fluchtwegmarkierung 130 gekennzeichnet. In Flugzeuglängsrichtung besitzt die Fluchtwegmarkierung 130 zwei geradlinige Abschnitte. Stirn- und Rückseite 132, 134 besitzen eine gebogene Fluchtwegmarkierung. Hierbei besitzt die zu dem Passagierraum hinweisende Fluchtwegmarkierung 132 einen ungefähr konstanten Krümmungsradius, während die zum Cockpit 120 weisende Fluchtwegmarkierung 134 keinen konstanten Krümmungsradius besitzt.

Auch der vordere Abschluß 136 der Mittelreihe 135 besitzt eine geschwungene Fluchtwegmarkierung. An den Seitenreihen können auch geschwungene Abschnitte der Fluchtwegmarkierung, beispielsweise am Übergang von der Sitzreihe zu einem Begrenzungselement, vorliegen. Hierbei können gegensinnig gekrümmte Fluchtwegmarkierungen 138 und 140 direkt hintereinander angeordnet sein.

Aus dem in Fig. 18 dargestellten Beispiel wird besonders deutlich, daß bei der Fluchtwegmarkierung weiterhin überwiegend geradlinige Elemente eingesetzt werden, um den Passagieren im Notfall eine schnelle und eindeutige Orientierung zu geben. Die geradlinigen Fluchtwegmarkierungen sind erfindungsgemäß durch die gebogenen Abschnitte der Fluchtwegmarkierung, wie beispielsweise 134, 132, 138 und 140, ergänzt, um auch im Notfall eine klare Orientierung an Gegenständen und Hindernissen vorbei, wie beispielsweise dem Schrank 128, zu gewährleisten.

## Patentansprüche

1. Fluchtwegmarkierung für ein Flugzeug mit mehreren photolumineszenten Elementen (12; 30; 36; 44; 88; 84; 102, 100; 54, 56; 70, 72; 56, 80; 104; 106; 112 - 89), die im Dunkeln leuchten und von den jedes ein Trägerelement aufweist, das zur Anbringung an einem Untergrund vorgesehen ist, **dadurch gekennzeichnet, daß** das Trägerelement an einer oder beiden Endseiten Anschlußkanten (14, 16; 31, 33; 38, 40; 46, 50; 108; 110) besitzt, die einen bogenförmigen Verlauf besitzen oder mindestens zwei Abschnitte aufweisen, die sich nicht senkrecht zu einer Orientierungsachse (A) des Trägerelements erstrecken, wobei die Orientierungsachse (A) bei einem gerade verlaufenden Trägerelement mit einer Mittellängsachse zusammenfällt und bei einem gebogenen Trägerelement in der Verlängerung der gebogenen Mittelachse liegt, und wobei die Orientierungsachsen (A) von zwei hintereinander angeordneten Trägerelementen einen Winkel miteinander einschließen.

2. Fluchtwegmarkierung nach Anspruch 1, **dadurch gekennzeichnet, daß** das Trägerelement symmetrisch zu der Orientierungsachse (A) ausgebildet ist.

3. Fluchtwegmarkierung nach Anspruch 1 oder 2, **dadurch gekennzeichnet, daß** die Anschlußkanten hintereinander angeordneter Trägerelemente entlang eines Abschnitts aneinanderstoßen.

4. Fluchtwegmarkierung nach einem der Ansprüche 1 bis 3, **dadurch gekennzeichnet, daß** die Anschlußkanten als Polygonzug ausgebildet sind.

5. Fluchtwegmarkierung nach einem der Ansprüche 1 bis 4, **dadurch gekennzeichnet, daß** die Anschlußkante in mindestens einem Abschnitt eine Krümmung aufweist.

6. Fluchtwegmarkierung nach Anspruch 5, **dadurch gekennzeichnet, daß** die Anschlußkante eine Kreisform aufweist.

7. Fluchtwegmarkierung nach einem der Ansprüche 1 bis 6, **dadurch gekennzeichnet, daß** das Trägerelement an einem Ende eine erste Anschlußkante und an einem zweiten Ende eine zweite Anschlußkante besitzt, wobei erste und zweite Anschlußkante eine komplementäre Form aufweisen.

8. Fluchtwegmarkierung nach Anspruch 7, **dadurch gekennzeichnet, daß** die komplementäre Form der Anschlußkante eine formschlüssige Verbindung ermöglicht.

9. Fluchtwegmarkierung nach einem der Ansprüche 1 bis 8, **dadurch gekennzeichnet, daß** mindestens ein Verbindungsstück (58, 74) vorgesehen ist, über das zwei benachbarte Trägerelemente (54, 56; 70, 72) miteinander verbunden werden können.

10. Fluchtwegmarkierung nach Anspruch 9, **dadurch gekennzeichnet, daß** das Verbindungsstück (58, 74) als ein längliches Element (58) ausgebildet ist, das an seinen Enden Verankerungszapfen (60) aufweist.

11. Fluchtwegmarkierung nach Anspruch 10, **dadurch gekennzeichnet, daß** die Unterseite des Trägerelements (54, 88) mindestens eine Ausnehmung (55, 87) für einen Verankerungszapfen aufweist.

12. Fluchtwegmarkierung nach einem der Ansprüche 1 bis 11, **dadurch gekennzeichnet, daß** mindestens ein Adapterelement (100) vorgesehen sind, das jeweils ein photolumineszentes Element trägt und zwei Anschlußkanten besitzt, deren Form an die Anschlußkante der Trägerelemente (102) derart angepaßt ist, daß das Trägerelement (102) unter unterschiedlichen Winkeln an das Adapterelement angelegt werden kann.

13. Fluchtwegmarkierung nach Anspruch 12, **dadurch gekennzeichnet, daß** das Adapterelement (100) eine bogenförmig konvexe Anschlußkante und das Trägerelement (102) eine bogenförmig konkave Anschlußkante besitzt derart, daß in einem vorbestimmten Winkelbereich Adapterelement (100) und Trägerelement (102) zueinander ausgerichtet werden können.

14. Fluchtwegmarkierung nach Anspruch 4 oder 5, **dadurch gekennzeichnet, daß** das Trägerelement Endkappen aufweist, deren Form entsprechend den Anschlußkanten des Trägerelements ausgebildet ist.

## Claims

1. Escape path marking for an aircraft having a plurality of photoluminescent elements (12; 30; 36; 44; 88; 84; 102; 100; 54, 56; 70, 72; 56, 80; 104; 106; 112-89) which glow in the dark and of which each has a carrier element that is provided for attaching to a subsurface, **characterized in that** the carrier element has connecting edges (14, 16; 31, 33; 38, 40; 46, 50; 108; 110) on one or both end sides, the edges having an arc-shaped progression or having at least two sections not extending perpendicular to an orientation axis (A) of the carrier element, wherein with a carrier element extending in a linear manner, the orientation axis (A) coincides with a central longitudinal axis, and with a curved carrier element the orientation axis (A) is located in the extension of the curved central longitudinal axis, and wherein the orientation axes (A) of two carrier elements disposed successively enclose an angle with each other.

2. Escape path marking according to claim 1, **characterized in that** the carrier element is configured in a symmetrical manner to the orientation axis (A).

3. Escape path marking according to claim 1 or 2, **characterized in that** the connecting edges of carrier elements arranged in succession abut one another along one section.

4. Escape path marking according to one of claims 1 to 3, **characterized in that** the connecting edges are configured as a polygonal outline.

5. Escape path marking according to one of claims 1 to 4, **characterized in that** the connecting edge in at least one section has a curvature.

6. Escape path marking according to claim 5, **characterized in that** the connecting edge has a circular shape.

7. Escape path marking according to one of claims 1 to 6, **characterized in that** the carrier element at one end has a first connecting edge and at a second end has a second connecting edge, the first and second connecting edges having a complementary shape.

8. Escape path marking according to claim 7, **characterized in that** the complementary shape of the connecting edge allows a positive connection.

9. Escape path marking according to one of claims 1 to 8, **characterized in that** at least one connecting piece (58, 74) is provided via which two adjacent carrier elements (54, 56; 70, 72) may be connected to one another.

10. Escape path marking according to claim 9, **characterized in that** the connecting piece (58, 74) is configured as an elongate element (58) which has anchoring pins (60) at its ends.

11. Escape path marking according to claim 10, **characterized in that** the underside of the carrier element (54, 88) has at least one recess (55, 87) for an anchoring pin.

12. Escape path marking according to one of claims 1 to 11, **characterized in that** at least one adapter element (100) is provided which respectively carries a photoluminescent element and has two connecting edges, the shape thereof being adapted to the connecting edge of the carrier elements (102) such that the carrier element (102) may be positioned against the adapter element at different angles.

13. Escape path marking according to claim 12, **characterized in that** the adapter element (100) has an arcuate convex connecting edge and the carrier element (102) has an arcuate concave connecting edge, such that the adapter element (100) and carrier element (102) may be aligned relative to one another in a predetermined angular range.

14. Escape path marking according to claim 4 or 5, **characterized in that** the carrier element has end caps, the shape thereof being configured to correspond to the connecting edges of the carrier element.

## Revendications

1. Marquage d'issue de secours pour un avion avec plusieurs éléments photoluminescents (12 ; 30 ; 36 ; 44 ; 88 ; 84 ; 102, 100 ; 54, 56 ; 70, 72 ; 56, 80 ; 104 ; 106 ; 112 à 89) qui s'illuminent dans le noir et parmi lesquels chacun présente un élément de support qui est prévu pour l'application sur un substrat, **caractérisé en ce que** l'élément de support possède des arêtes de raccord (14, 16 ; 31, 33 ; 38, 40 ; 46, 50 ; 108 ; 110) sur un côté d'extrémité ou les deux qui possèdent un tracé courbe ou présentent au moins deux sections qui ne s'étendent pas perpendiculairement à un axe d'orientation (A) de l'élément de support, dans lequel l'axe d'orientation (A) coïncide avec un axe longitudinal médian dans le cas d'un élément de support s'étendant de manière droite et se situe dans le prolongement de l'axe médian courbé dans le cas d'un élément de support courbé, et dans lequel les axes d'orientation (A) de deux éléments de support disposés l'un derrière l'autre incluent un angle entre eux.

2. Marquage d'issue de secours selon la revendication 1, **caractérisé en ce que** l'élément de support est réalisé symétriquement à l'axe d'orientation (A).

3. Marquage d'issue de secours selon la revendication 1 ou 2, **caractérisé en ce que** les arêtes de raccord d'éléments de support disposés les uns derrière les autres se touchent le long d'une section.

4. Marquage d'issue de secours selon l'une quelconque des revendications 1 à 3, **caractérisé en ce que** les arêtes de raccord sont réalisées en tant que tracé polygonal.

5. Marquage d'issue de secours selon l'une quelconque des revendications 1 à 4, **caractérisé en ce que** l'arête de raccord présente une courbure dans au moins une section.

6. Marquage d'issue de secours selon la revendication 5, **caractérisé en ce que** l'arête de raccord présente une forme circulaire.

7. Marquage d'issue de secours selon l'une quelconque des revendications 1 à 6, **caractérisé en ce que** l'élément de support possède une première arête de raccord à une extrémité et une seconde arête de raccord à une seconde extrémité, dans lequel les première et seconde arêtes de raccord présentent une forme complémentaire.

8. Marquage d'issue de secours selon la revendication 7, **caractérisé en ce que** la forme complémentaire de l'arête de raccord permet une connexion par fermeture géométrique.

9. Marquage d'issue de secours selon l'une quelconque des revendications 1 à 8, **caractérisé en ce qu'**au moins une pièce de connexion (58, 74) est prévue, par le biais de laquelle deux éléments de support voisins (54, 56 ; 70, 72) peuvent être reliés ensemble.

10. Marquage d'issue de secours selon la revendication 9, **caractérisé en ce que** la pièce de connexion (58, 74) est réalisée en tant qu'élément longitudinal (58) qui présente des tourillons d'ancrage (60) à ses extrémités.

11. Marquage d'issue de secours selon la revendication 10, **caractérisé en ce que** le côté inférieur de l'élément de support (54, 88) présente au moins un évidement (55, 87) pour un tourillon d'ancrage.

12. Marquage d'issue de secours selon l'une quelconque des revendications 1 à 11, **caractérisé en ce qu'**au moins un élément adaptateur (100) est prévu, lequel porte à chaque fois un élément photoluminescent et possède deux arêtes de raccord dont la forme est adaptée à l'arête de raccord des éléments de support (102) de telle sorte que l'élément de support (102) peut être appliqué sur l'élément adaptateur à différents angles.

13. Marquage d'issue de secours selon la revendication 12, **caractérisé en ce que** l'élément adaptateur (100) possède une arête de raccord convexe courbe et l'élément de support (102) possède une arête de raccord concave courbe de telle sorte qu'élément adaptateur (100) et élément de support (102) peuvent être orientés l'un par rapport à l'autre dans une plage angulaire prédéterminée.

14. Marquage d'issue de secours selon la revendication 4 ou 5, **caractérisé en ce que** l'élément de support présente des capuchons d'extrémité dont la forme est réalisée en fonction des arêtes de raccord de l'élément de support.
